# EUROPÄISCHE PATENTSCHRIFT

(11) **EP 4 098 518 B1**
(45) Veröffentlichungstag und Bekanntmachung des Hinweises auf die Patenterteilung: **10.09.2025**
(21) Anmeldenummer: 22171089.0
(22) Anmeldetag: 02.05.2022
(51) Int. Cl.: B62D 5/04

(54) **VERFAHREN ZUM BETRIEB EINES LENKSYSTEMS**
METHOD FOR OPERATING A STEERING SYSTEM
PROCÉDÉ PERMETTANT DE FAIRE FONCTIONNER UN SYSTÈME DE DIRECTION

(30) Priorität: 28.05.2021 DE 102021205474
(43) Veröffentlichungstag der Anmeldung: 07.12.2022
(73) Patentinhaber: VOLKSWAGEN AG, 38440 Wolfsburg (DE)
(72) Erfinder: Leibel, Wassili, 27751 Delmenhorst (DE); Fricke, Julian, 31241 Ilsede (DE); Kreis, Christopher, 38126 Braunschweig (DE)

(56) Entgegenhaltungen:
- WO-A1-2019/219329
- WO-A1-2021/085228
- US-A1- 2003 230 448
- US-A1- 2020 247 462
- US-A1- 2020 331 522
- US-A1- 2021 016 827
- US-A1- 2022 250 676

## Beschreibung

Die Erfindung betrifft ein Verfahren zum Betrieb eines Lenksystems eines Fahrzeugs, mit einem Force-Feedback-Aktuator, der auf eine Lenkhandhabe zur Abbildung von Reaktionskräften zumindest eines gelenkten Rades des Lenksystems in Abhängigkeit von zumindest einer Fahrbahnbeschaffenheit, einer Fahrzeuggeschwindigkeit oder eines aktuellen Lenkwinkels des Rades wirkt, wobei der Aktuator eine, von zumindest einem ersten Phasensystem oder zweiten Phasensystem antreibbare, elektrische Maschine umfasst, gemäß dem Oberbegriff von Patentanspruch 1.

Elektrische Hilfskraftlenkungen (EPS, electric power steering) sind bei heutigen Personenkraftwagen Stand der Technik oder lösen zunehmend die bekannten hydraulischen Hilfskraftlenkungen ab. Bei solchen elektrischen Hilfskraftlenksystemen ist eine als Lenkrad gebildete Lenkhandhabe über eine Lenkwelle mechanisch mit einem Lenkgetriebe und dieses wiederum über Spurstangen und Radlenkhebeln mit gelenkten Rädern des Fahrzeugs verbunden. Geplante zukünftige Fahrzeuggenerationen ermöglichen zumindest teilweise automatisiertes Fahren, wobei ein Fahrer nicht mehr ständig die Lenkung und Steuerung des Fahrzeugs übernimmt. Bei solchen Lenksystemen kann auch theoretisch auf einen mechanischen Durchgriff von der Lenkhandhabe über das Lenkgetriebe zu den gelenkten Rädern verzichtet werden und das Lenksystem als Steer-by-Wire-Lenksystem gebildet werden.

Bei solchen Steer-by-Wire-Lenksystemen erhält der Fahrer wegen der fehlenden mechanischen Koppelung der Lenkhandhabe mit den gelenkten Rädern keine unmittelbare physische Rückmeldung von Radreaktionskräften auf seine Lenkhandhabe. Die fehlende physische Rückmeldung erschwert dem Fahrer das sichere Erfassen von aktuellen Fahrsituationen und er ist in seiner Fähigkeit, situationsbezogene und angemessene Lenkmanöver oder auch Beschleunigungen und Verzögerungen des Fahrzeugs zu initiieren, eingeschränkt. Dadurch kann die Fahrsicherheit beeinträchtigt sein.

Um nun dem Fahrer des Fahrzeugs ein realistisches Fahrgefühl an der Lenkhandhabe zu vermitteln, ist es bekannt, aus einer tatsächlichen, aktuellen Fahrsituation Parameter, wie Lenkwinkel, Fahrgeschwindigkeit oder Radreaktionskräfte und dergleichen zu erfassen oder in einer Simulation zu berechnen, und aus diesen Parametern ein Rückkoppelungs-Signal zu bilden, welches einer Steuer- und/oder Reglungseinrichtung für einen Force-Feedback-Aktuator zugeführt wird. Der Force-Feedback-Aktuator stellt einen Handmoment- oder Lenkradsteller dar, und kann in Abhängigkeit von dem Rückkoppelungs-Signal ein, den realen Radreaktionsmomenten oder den Reaktionskräften der gelenkten Räder entsprechendes Rückstellmoment auf die Lenkhandhabe aufbringen. Derartige Lenkeinrichtungen geben dem Fahrer somit den Eindruck einer realen Fahrsituation, wie bei einer mechanischen Lenkung oder einer Hilfskraftlenkung, was eine intuitive Reaktion des Fahrers auf sich ändernde Fahrsituationen erleichtert.

Die DE 10 2008 036 730 A1 beschreibt ein Steer-by-Wire-Lenksystem, mit einer Lenkhandhabe, die einen, von einer elektrischen Maschine angetriebenen Force-Feedback-Aktuator aufweist. Die elektrische Maschine kann von einer Steuer- und/oder Regelungseinrichtung angesteuert werden, die in Abhängigkeit von Messwerten, welche die jeweilige, aktuelle Fahrsituation beschreiben, den Motorstrom über Umrichter steuert. Die Motorwelle der elektrischen Maschine ist mit der Lenkhandhabe wirkverbunden, womit das aktuelle Motordrehmoment identisch mit einem an der Lenkhandhabe eingekoppelten Handmoment sein kann. Der Force-Feedback-Aktuator erzeugt im Betrieb des Lenksystems ein Lenkmoment, welches von dem Fahrer überwunden werden muss.

Grundsätzlich sind solche Force-Feedback-Aktuatoren aus der elektrischen Maschine und einem Untersetzungsgetriebe gebildet, das es auch bei kleinen Anschlusswerten der elektrischen Maschine ermöglicht, entsprechende Handmomente zu erzeugen.

Die DE 10 2006 056 042 A1 beschreibt ein System zur Regelung einer elektromechanischen Lenkung, mit einem ersten Steuergerät mit elektronischer Wegfahrsperre und einem Lenkungssteuergerät zur Ansteuerung der elektromechanischen Lenkung, das in einem ersten Zustand die elektromechanische Lenkung hemmt und in einem zweiten Zustand die elektromechanische Lenkung freigibt, um ein Lenken zu ermöglichen. Bei einem Systemstart des Lenkungssteuergerätes wird zunächst der erste Zustand eingenommen und nach Aufheben der elektronischen Wegfahrsperre in den zweiten Zustand geschaltet. Durch die Einbindung des Lenkungssteuergerätes in den Verbund einer elektronischen Wegfahrsperre kann vollständig auf separate Lenkverriegelungen verzichtet werden.

Die US 2009/0026998 A1 beschreibt einen pulsweitengesteuerten Dreiphasen-Gleichstrommotor mit zwei Dreiphasensystemen, oder einer Mehrheit an Dreiphasensystemen, die abwechselnd in Betrieb, den Motor zum Betrieb eines Force-Feedback-Aktuators beispielsweise zur Beaufschlagung eines Pedals oder einer Lenkhandhabe eines Fahrzeugs befähigen. Der Motor kann sowohl als Lenkaktuator zur Bereitstellung eines Hilfsmoments oder als Force-Feedback-Aktuator eingesetzt sein.

Die DE 10 2019 208 201 B3 beschreibt ein Verfahren zum Betreiben eines Lenksystems eines Fahrzeugs, wobei ein Aktuator zur Erzeugung eines Moments bei einer Lenkhandhabe des Fahrzeugs vorgesehen ist und zumindest die Verfahrensschritte
- Erzeugen des Moments bis zu einem Maximalmoment, wenn das Maximalmoment freigegeben ist und Beschränken des Maximalmoments auf ein Grenzmoment,
- Erkennen einer Fahrzeugsituation bei dem Fahrzeug,
- Freigeben des Maximalmoments, wenn die Fahrzeugsituation Ein- und/oder Ausstieg des Fahrers erkannt wird, um die Lenkhandhabe zu versteifen,
- Begrenzen des Maximalmoments, wenn die Fahrzeugsituation als ein Fahrbetrieb des Fahrzeugs erkannt wird,
umfasst.

Damit wird eine Komfortfunktion in Bezug auf eine Einstiegshilfe realisiert. Dazu wird der Force-Feedback-Aktuator mit redundanten Wicklungen, vorzugsweise mindestens oder genau sechs Wicklungen versehen, wobei sämtliche Wicklungen zum Erzeugen des Maximalmoments des Aktuators verwandt werden und nur ein Teil der Wicklungen, vorzugsweise die Hälfte, zum Erzeugen des Feedbackmomentes benutzt bzw. bestromt werden.

Die WO 2021 085 228 A1 offenbart ein Lenksystem mit einem Force-Feedback-Aktuator, bei dem der Force-Feedback-Aktuator mittels zweier redundanter Systeme aus Steuereinheiten und Motorantriebseinheiten angesteuert wird. Das Lenksystem ist dazu ausgebildet, im Falle einer Fehlfunktion von einem System auf das andere System umzuschalten.

Die US 2020 / 0247462 A1 offenbart ein ähnliches System, bei dem ein Motor des Force-Feedback-Aktuators mit doppelten Wicklungen durch 2 Frequenzumrichter angesteuert wird. Die US2020 / 03315221 offenbart einen Force-Feedback-Aktuator mit 2 unabhängigen miteinander kommunizierenden eigenständigen Aktuatoren, von denen lediglich einer im Normalzustand betrieben wird. Im Fall des Auftretens abnormaler Ereignisse kann das System in einen Modus umschalten, in dem Beide Aktuatoren unabhängig voneinander betrieben werden.

Die DE 11 2019 002 534 T5 offenbart ein Lenksystem mit einem Force-Feedback-Aktuator, bei dem der Force-Feedback-Aktuator mittels zweier redundanter Systeme aus Steuereinheiten und Motorantriebseinheiten angesteuert wird. Beide Systeme arbeiten im Normalfall gleichzeitig mit einer begrenzten elektrischen Leistung. Im Fall eines Fehlers in einem System wird die Leistungsgrenze des anderen Systems erhöht.

US 2003 / 0230448 A1 offenbart ein Lenksystem mit einem Force-Feedback-Aktuator, bei dem der Force-Feedback-Aktuator, der bei einer Fehlfunktion ein bestimmtes haptisches Feedback vermittelt, wenn einer oder beide Motoren des Force-Feedback-Aktuators ausfallen.

Die bekannten Lenksysteme mit Force-Feedback-Aktuatoren weisen insbesondere beim Umschalten der Bestromung eines Phasensystems auf ein anderes Phasensystem Drehmomentsprünge oder -schwankungen auf, die während der Fahrt eines Fahrzeugs störend in Bezug auf eine einwandfreie Kontrolle des Fahrzeugs sind.

Ausgehend von diesem Stand der Technik liegt der Erfindung daher die Aufgabe zugrunde, ein Verfahren zum Betrieb eines Lenksystems eines Fahrzeugs, mit einem Force-Feedback-Aktuator anzugeben, dessen Fahrer durch systembedingte Drehmoment- oder Reaktionskraftänderungen an der Lenkhandhabe während der Fahrt unbeeinträchtigt bleibt.

Die Aufgabe wird mit einem Verfahren zum Betrieb eines Lenksystems mit der Gesamtheit der Merkmale von Patentanspruch 1 gelöst.

Die Erfindung betrifft ein Verfahren zum Betrieb eines Lenksystems eines Fahrzeugs mit einem Force-Feedback-Aktuator, der auf eine Lenkhandhabe zur Abbildung von Reaktionskräften zumindest eines gelenkten Rades des Lenksystems in Abhängigkeit von zumindest einer Fahrbahnbeschaffenheit, einer Fahrzeuggeschwindigkeit oder eines aktuellen Lenkwinkels des gelenkten Rades wirkt, wobei der Force-Feedback-Aktuator eine von zumindest einem ersten Phasensystem und einem zweiten Phasensystem antreibbare elektrische Maschine umfasst, wobei ein Schalten von dem zumindest ersten Phasensystem und / oder zumindest zweiten Phasensystem mittels einer Steuer- und/oder Regelungseinrichtung des Lenksystems erfolgt. Unter Schalten von einem Phasensystem wird hierbei das Verwenden bzw. aktivieren verstanden.

Das Schalten von einem Phasensystem kann nach einer Alternative beim Erkennen einer im Wesentlichen stillstehenden Lenkhandhabe und / oder bei einer Geradeausfahrt des Fahrzeugs erfolgen. Vorteilhaft ist hierbei, dass ein Drehmoment oder Kraftsprung des Force-Feedback-Aktuators und ein Aufprägen dessen auf die Lenkhandhabe vermieden werden kann. Dadurch kann vermieden werden, dass der Fahrer während der Fahrt irritierender Rückmeldungen haptischer Art auf seine, mit der Hand geführte, Lenkhandhabe erfährt. Weiter vorteilhaft ist, dass durch das zeitlich unterschiedliche Verwenden von verschiedenen Phasensystemen die Belastung jedes einzelnen Phasensystems verringert und somit die Lebensdauer erhöht werden kann. Weiterhin kann bei einem Ausfall von einem Phasensystem ein anderes Phasensystem das ausgefallene Phasensystem ersetzen. Somit kann auch die Betriebssicherheit erhöht werden. Durch das zeitgleiche Verwenden von mehreren Phasensystemen kann vorteilhafterweise ein höheres Drehmoment erzeugt werden.

Weiterhin wird zwischen dem zumindest ersten Phasensystem und dem zumindest zweiten Phasensystem in Abhängigkeit einer Sensorauswertung und / oder einem Zustand des Fahrzeugs umgeschaltet. Eine Sensorauswertung beschreibt hierbei beispielsweise das sensorische Erfassen von Drehzahlen und/oder von Winkelstellungen an der Lenkhandhabe und/oder den Rädern, der Fahrzeuggeschwindigkeit, von im Fahrzeug sitzenden Personen, insbesondere dem Fahrer, dem offenen, geschlossenen oder verriegelten Türzustand, der Lenkradposition und / oder dem Status und / oder Statuswechsel der Zündung. Vorteilhaft ist hierbei, dass ein Schalten beispielsweise für den Fahrer unbemerkt erfolgen kann. Dies kann durch die Vermeidung von Irritationen des Fahrers zu einer erhöhten Sicherheit und einem besseren Fahrgefühl beitragen.

Bevorzugt erfolgt das Schalten der Phasensysteme anhand einer Lenkrad-Kennlinie des Lenksystems. Besonders bevorzugt ist die Lenkrad-Kennlinie eine Drehzahl-Drehmomentkennlinie. Die Lenkrad-Kennlinie für die Lenkhandhabe weist hierzu grundsätzlich einen Lenkbereich für den Betrieb des Lenksystems während der Fahrt und einen Festhaltebereich für die Bereitstellung der Einstiegs- und Ausstiegshilfe auf, wobei die Lenkhandhabe relativ zum Fahrzeug mechanisch durch den Force-Feedback-Aktuator festgelegt ist. Ein Wechsel zwischen dem Festhaltebereich und Lenkbereich kann beispielsweise bei im Wesentlichen 360 °/s erfolgen. Hierbei ist von Vorteil, dass durch eine Lenkrad-Kennlinie ein für den Fahrer unbemerktes Schalten der Phasensysteme erfolgen kann.

Es ist also der Lenkbereich der betreffenden Kennlinie, der hier ohne jeden Drehmomentsprung aufzuweisen, ausgeführt ist. Dies schließt auch das Erreichen von Endanschlagpositionen (elektrisch oder mechanisch) des gelenkten Rades oder der gelenkten Räder des Fahrzeugs ein. Der Force-Feedback-Aktuator mit seiner zugehörigen Steuer- und/oder Regelungseinrichtung und entsprechender Sensorik, wie Lenkwinkelsensor, Lenkmomentsensor und dergleichen, werden durch das erfindungsgemäß vorgenommene Umschalten von einem auf das andere Phasensystem weniger beansprucht, sind thermisch weniger beansprucht und ihre Verfügbarkeit und ihre Lebensdauer verbessert, bzw. verlängert. Bei einer guten Funktion des Lenksystems erkennt der Fahrer des Fahrzeugs überhaupt nicht, wenn von einem auf das andere Phasensystem umgeschaltet wird.

Da Lenksysteme unterschiedliche Auslegungen, vor allem unterschiedliche Lenktrapeze aufweisen und unterschiedliche Selbstrückstelleigenschaften beim Ausleiten einer Kurvenfahrt haben können, kann ein Umschalten von einem Phasensystem auf ein anderes Phasensystem in Abhängigkeit von dem jeweiligen Lenksystem bei unterschiedlichen maximalen Lenkwinkeln vorgenommen werden. Ein Lenksystem beispielsweise, welches eine mehr indifferente Auslegung oder Charakteristik aufweist, erlaubt ein Umschalten der Phasensysteme noch bei größeren Lenkwinkeln, wie dies bei einem Lenksystem mit größerer Selbstrückstell-Eigenschaft möglich ist.

In einem alternativen Ausführungsbeispiel des Verfahrens wird vor dem Umschalten von einem auf das andere Phasensystem ein Lenkmoment von höchstens 0,1 Nm zusätzlich zu den genannten Lenkparametern erkannt und erst bei Vorliegen eines sehr geringen Lenkmomentes oder geringer Rad-Reaktionskräfte umgeschaltet. Dies verbessert zudem die Sicherheit beim Betrieb des Fahrzeugs.

Bevorzugt erfolgt das Umschalten von einem auf das andere Phasensystem unabhängig von der Fahrzeuggeschwindigkeit während der Fahrt des Fahrzeugs, sodass beispielsweise auch bei beschleunigter Geradeausfahrt auf einer Autobahn oder Kraftfahrstraße umgeschaltet werden kann. So sind auch sehr lange Fahrten ohne eine besondere Beanspruchung, insbesondere thermische Beanspruchung von Komponenten des Force-Feedback-Aktuators und seiner Steuer- und/oder Regelungseinrichtung nebst Umrichtern machbar.

Während der Fahrt des Fahrzeugs ist vorzugsweise nur ein Phasensystem der elektrischen Maschine des Force-Feedback-Aktuators bestromt und es kann in einem vorgebbaren Zeitintervall, aber auch adaptiv geregelt und in Abhängigkeit von einer individuellen Beanspruchungssituation, von einem Phasensystem auf das andere Phasensystem umgeschaltet werden.

Weiterhin ist bevorzugt, dass die Umschaltung von einem Phasensystem auf das andere Phasensystem in Abhängigkeit weiterer Parameter, wie etwa einer Betriebszeit und/oder einer Beanspruchungssituation der Phasensysteme und des Force-Feedback-Aktuators vorgenommen wird.

Um das Umschalten auf ein anderes Phasensystem von dem Fahrer des Fahrzeuges unbemerkt zu gestalten, ist in einem bevorzugten Ausführungsbeispiel eine Rampenfunktion, insbesondere eine Drehmomentrampe für die elektrische Maschine des Force-Feedback-Aktuators vorgesehen, die beispielsweise in einer Datenspeichereinrichtung der Steuer- und/oder Regelungseinrichtung abgelegt sein kann.

Das Aktiv- oder Inaktiv-Schalten eines jeweiligen Phasensystems mit Umrichtern ermöglicht eine Selbstdiagnose -Funktion vorzusehen, um die elektrischen und elektronischen Komponenten, wie etwa die Wicklungen und Halbleiterelemente der Umrichter, aber auch alle Komponenten die momentenbildende oder flussbilde Stromkomponenten der Regelung der elektrischen Maschine umfassen, zu überprüfen. Es sei hier lediglich beispielhaft das Aufprägen eines d-Stromes unter Analyse des jeweiligen Phasenstromes und/oder der Drehzahl und/oder des Drehmoments eines Rotors der elektrischen Maschine als Teile der Selbstdiagnose erwähnt.

Zu dem Begriff des d-Stromes sei angemerkt, dass elektrische Drehstrommaschinen bekanntermaßen über ein oder mehrere Dreiphasensysteme verfügen, wobei ein solches Dreiphasensystem in einem räumlichen Koordinatensystem mit den Achsen U, V und W dargestellt wird. Mit Hilfe einer sogenannten d/q-Transformation lässt sich nun ein solches Dreiphasensystem in ein zweiphasiges Koordinatensystem mit den Achsen d und q überführen. Das d/q-Koordinatensystem ist im Gegensatz zu dem U-V-W-Koordinatensystem nicht fest, sondern rotiert mit dem Rotor der Drehstrommaschine, wobei die q-Achse senkrecht zur magnetischen Erregung im Rotor steht und die d-Achse (d-Strom) parallel zur magnetischen Erregung im Rotor ausgerichtet ist. Der d-Strom führt daher lediglich zur Verstärkung oder Abschwächung des magnetischen Feldes der Drehstrommaschine und hat keinen Einfluss auf das von der Drehstrommaschine entwickelte Drehmoment oder deren Rotordrehzahl.

In einer kostengünstigen, robusten Ausführungsform des Lenksystems ist die elektrische Maschine des Force-Feedback-Aktuators als eine Drehstrommaschine mit zwei Phasensystemen von jeweils drei Phasen gebildet, wobei für jedes Phasensystem zumindest ein Umrichter mit vorzugsweise zwei B6-Halbbrücken vorgesehen ist. Es können vorzugsweise PWM- oder PAM-Modulationsverfahren verwendet werden, um die elektrische Maschine des Force-Feedback-Aktuators zu betreiben.

Die Umrichter werden mit einem idealen Proportionalverhalten angenommen, wobei auch Mehrgrößen-Stromregler zur dynamischen Entkoppelung der momentenbildenden und flussbildenden Stromgrößen herangezogen werden können, um Drehmomentwelligkeit zu beseitigen.

Um eine Feststellfunktion der Lenkhandhabe zu verwirklichen, ist in dem erfindungsgemäßen Verfahren vorgesehen, dass ein, vorzugsweise zwei Phasensysteme mit jeweils drei Phasen (a, b, c) und mit insgesamt vorzugsweise sechs Phasen bestromt werden, wobei pro Phasensystem zumindest ein Umrichter vorgesehen ist und wobei ein oder zwei Phasensysteme eine Festhaltefunktion für die Lenkhandhabe realisieren, sobald ein Öffnen der Fahrertür des Fahrzeugs erkannt wird. Nach Erkennen einer Betätigung etwa eines Zündschlosses oder einer Sitzbelegung des Fahrersitzes kann auf nur noch ein Phasensystem umgeschaltet werden. Ein Bestromen von zumindest zwei Phasensystemen ist auch vorgesehen, wenn elektrische oder mechanische Endanschlagspositionen der gelenkten Räder erreicht werden oder sind. Vorteilhaft ist hierbei, dass der Fahrer beim Einsteigen in das Fahrzeug und / oder beim Aussteigen aus dem Fahrzeug sich an der Lenkhandhabe festhalten kann.

Beide Phasensysteme sind zusammen mit der Steuer- und/oder Regelungseinrichtung geeignet, um elektronische Endanschlagsfunktionen des Lenksystems auszuführen. Die Umrichter sind in an sich bekannter Weise mit Halbleiterelementen in Halbbrückentechnik oder Vollbrückentechnik aufgebaut, wobei die elektrische Maschine vorzugsweise ein Drehstrommotor ist, jedoch auch andere geeignete Bauformen, beispielsweise Gleichstrom- oder Wechselstrommotoren, aufweisen kann.

Weiterhin ist bevorzugt, dass über zumindest zwei Phasensysteme elektrische und/oder mechanische Endanschläge des Rades dem Fahrer angezeigt werden. Dies ermöglicht auch dem Fahrer das Erreichen der Endanschläge der gelenkten Räder zu vergegenwärtigen, wodurch die Handhabung des Fahrzeugs verbessert werden kann.

Die Erfindung wird nachfolgend anhand eines Ausführungsbeispiels näher erläutert. Es zeigen:
- Fig. 1: eine schematische Ansicht eines Steer-by-Wire-Lenksystems, mit dem das erfindungsgemäße Verfahren durchgeführt werden kann,
- Fig. 2: eine schematische Ansicht einer Schaltung einer elektrischen Maschine für einen Force-Feedback-Aktuator, der auf die Lenkhandhabe des Lenksystems in Fig. 1 wirkt; und
- Fig. 3: ein Beispiel einer Lenkrad-Kennlinie des Steer-by-Wire-Lenksystems in Fig. 1.

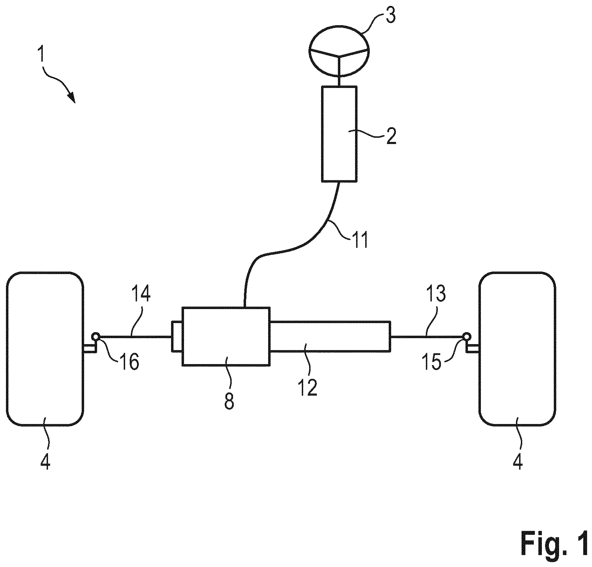

Fig. 1 zeigt in einer schematischen Ansicht ein Lenksystem 1, welches als Steer-By-Wire-Lenksystem ausgebildet ist und zum Lenken von gelenkten Rädern 4 eines in seiner Gesamtheit nicht gezeigten Personenkraftwagens dient. Eine als Lenkrad ausgebildete Lenkhandhabe 3 ist mit Hilfe einer Lenkwelle mit einer Welle eines Force-Feedback-Aktuators 2 wirkverbunden. Ferner ist die Lenkhandhabe 3 mit einem nicht näher dargestellten Lenkradwinkelsensor wirkverbunden. Der Force-Feedback-Aktuator 2 und der Lenkradwinkelsensor sind über eine Steuerleitung 11, die sowohl Sensorsignale des Lenkradwinkelsensors, als auch Steuerbefehle für den Force-Feedback-Aktuator 2 überträgt, mit einer Steuer- und/oder Regelungseinrichtung 8 verbunden.

Die Steuer- und/oder Regelungseinrichtung 8 ist mit weiteren, nicht gezeigten Sensoren zur Messung von Radlenkwinkeln, der Fahrgeschwindigkeit oder mit Sensoren zur Messung der Sitzbelegung des Fahrzeugs und weiteren Sensoren, die den jeweiligen aktuellen Fahrzustand und Fahrtparameter des Fahrzeugs beschreiben, verbunden.

Ein Lenkaktuator 12, beispielsweise in der Art einer elektrischen Maschine, die eine Kugelumlaufmutter antreibt und eine Kugelumlaufspindel axial verschiebt, dient zur Verstellung der Radlenkwinkel der gelenkten Räder 4 und ist mit diesen jeweils über eine Spurstange 13, 14 und Radlenkhebel 15, 16 gelenkig verbunden.

Der Force-Feedback-Aktuator 2 dient zur haptischen Rückkoppelung der Rückstellkräfte der gelenkten Räder 4 auf den nicht dargestellten Fahrer des Fahrzeugs und ermöglicht trotz der fehlenden mechanischen Verbindung der Räder 4 mit der Lenkhandhabe 3 eine authentische Rückmeldung über die aktuelle Fahrsituation des Fahrzeugs.

Das Rückstellmoment des Force-Feedback-Aktuators 2 wird von der Steuer- und/oder Regelungseinrichtung 8 aus der ermittelten Fahrgeschwindigkeit, dem aktuellen Lenkwinkel an der Lenkhandhabe 3 und einem Reaktionsmoment der gelenkten Räder 4 ermittelt und ein entsprechendes Signal dem Force-Feedback-Aktuator 2 aufgeprägt.

Besonders geeignet für den Antrieb des Force-Feedback-Aktuators 2 haben sich Dreiphasen-Gleichstrommotoren als elektrische Maschinen 7 erwiesen, deren drei Phasen a, b, c über einen jeweiligen Umrichter 9, 10 die Drehzahlregelung unter Zuhilfenahme von Leistungshalbleitern, wie Transistoren oder Thyristoren vorgenommen wird. Dies in Kombination mit Pulsbreiten- oder Pulsweitenmodulation.

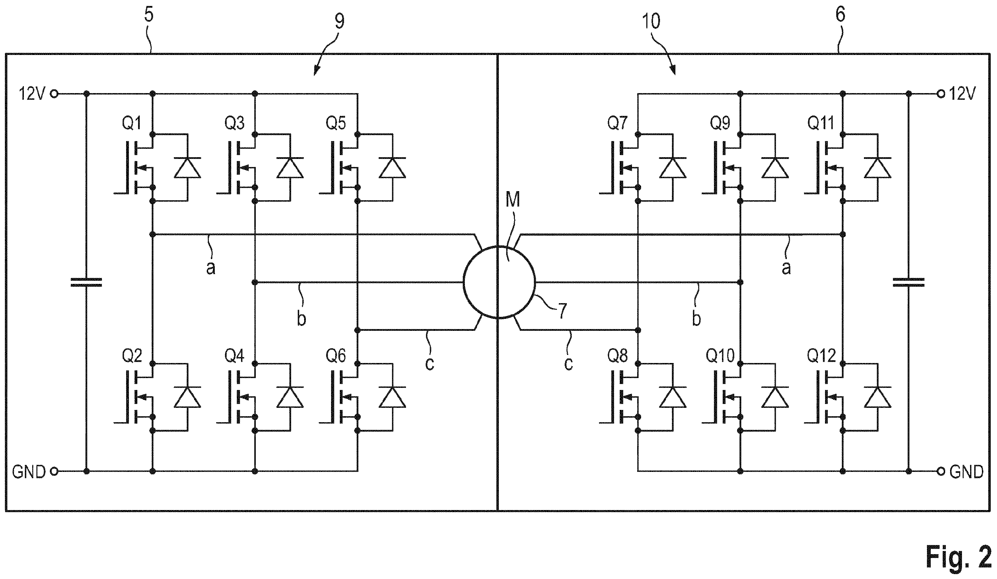

Fig. 2 verdeutlicht schematisch eine Verschaltung einer elektrischen Maschine 7 mit einer derartigen Umrichterschaltung, wobei zwei Umrichter 9, 10 für zwei Phasensysteme 5, 6, die redundant und abwechselnd den Betrieb der Maschine 7 übernehmen können, vorgesehen sind.

Wie Fig. 2 zeigt, sind jeweils zwei Umrichter-Halbbrücken (Q₁+Q₂), (Q₃+Q₄), (Q₅+Q₆) zur Ansteuerung des ersten Phasensystems 5 und jeweils zwei Umrichter-Halbbrücken (Q₇+Q₈), (Q₉+Q₁₀), (Q₁₁+Q₁₂) zur Ansteuerung des zweiten Phasensystems 6 vorgesehen.

Es kann auch vorteilhaft sein um Kosten zu sparen, je Umrichter 9, 10 nur eine B6-Brücke und zwei gegenpolig angeordnete Transistoren je Phase a, b, c zu verwenden.

Da der Betrieb eines Dreiphasensystems während der Fahrt des Fahrzeugs haptische und akustische Vorteile gegenüber einem Betrieb eines Sechsphasensystems bietet, das unter Umständen mehr Drehmomentwelligkeit aufweisen kann und im Aufbau komplexer darzustellen ist, ist vorgesehen, das Lenksystem 1 abwechselnd mit dem ersten Phasensystem 5 und dem zweiten Phasensystem 6 zu betreiben.

Ein von der Steuer- und/oder Regelungseinrichtung 8 vorgenommener Umschaltvorgang zwischen den Phasensystemen 5 und 6 erfolgt, wenn eine geringe Lenkgeschwindigkeit, insbesondere eine Geradeausfahrt erkannt wird, oder wenn ein geringer Lenkwinkel vorliegt.

Durch diese konstruktive Maßnahme bemerkt der Fahrer im Idealfall das Umschalten nicht, da dies immer auch bei einem sehr geringen anliegenden Lenkmoment, z. B. 0,1 Nm oder weniger an der Lenkhandhabe 3 erfolgt. Grundsätzlich ist für das Umschalten die jeweilige aktuelle Fahrgeschwindigkeit unwesentlich und kann vorteilhaft in bestimmten Zeitintervallen erfolgen.

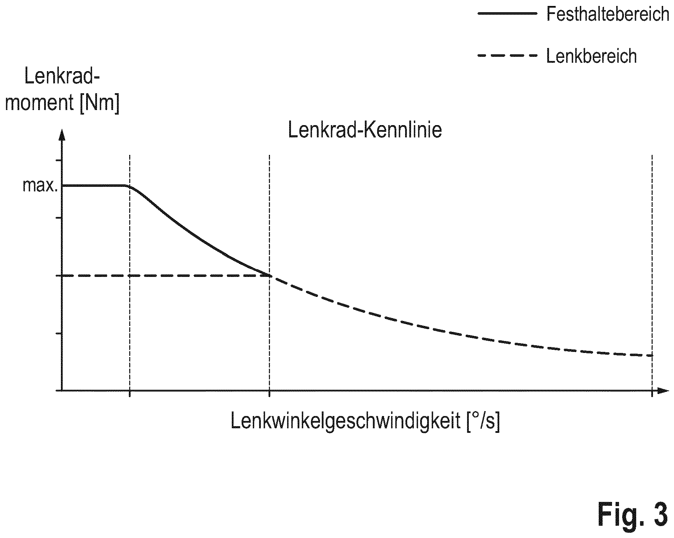

Dadurch wird der in Fig. 3 dargestellte Lenkbereich (gestrichelte Linie) ermöglicht. Dadurch ist im Betrieb des Lenksystems 1 auch eine thermische Überlastung eines jeden Dreiphasensystems 5, 6 vermieden und insgesamt die Verfügbarkeit und Lebensdauer der Motorsteuerung der elektrischen Maschine 7 verbessert.

Die Umschaltung zwischen den Phasensystemen 5 und 6 kann auch in Abhängigkeit von der Betriebszeit des Lenksystems 1 während der Fahrt oder einer Betriebszeit insgesamt vorgenommen werden.

Um eine weitere Komfortsteigerung beim Betrieb des Lenksystems 1 zu gewährleisten, erfolgt die Umschaltung unter Berücksichtigung einer Rampenfunktion und insbesondere unter Berücksichtigung einer Drehmomentrampenfunktion für die Welle der elektrischen Maschine 7 des Force-Feedback-Aktuators 2.

Das jeweils abgeschaltete Phasensystem 5 oder 6 kann einer Selbstdiagnose unterzogen werden und so die Betriebssicherheit des Lenksystems 1 weiter verbessert werden. Bei Ausfall eines Phasensystems 5, oder 6 kann sicher der Betrieb mit dem verbleibenden Phasensystem aufrecht erhalten werden. Der Betrieb von nur einem Phasensystem 5 oder 6 gewährleistet auch, dass keine Synchronisationsprobleme zwischen den Umrichtern 9, 10 auftreten können, haptischen Einbußen etwa durch Drehmomentwelligkeit der Stellkraft des Force-Feedback-Aktuators 2 somit vermieden sind.

Wie Fig. 3 zeigt, ist mit dem Verfahren auch eine Feststell- oder Festhaltefunktion für die Lenkhandhabe 3 realisierbar, was durch den durchgezogenen Linienverlauf, dem Festhaltebereich, verdeutlicht ist. Durch die Bestromung beider Phasensysteme 5, 6 ist ein Maximalwert von etwa dem Doppelten, wie im Lenkbetrieb - abseits der Endanschläge der gelenkten Räder - erzielbar. Dies ermöglicht dem Fahrer vor und nach der Fahrt sich an dem Lenkrad abzustützen, um aus dem Fahrzeug aus- oder in das Fahrzeug einzusteigen. Die ermöglicht auch dem Fahrer das Erreichen der Endanschläge der gelenkten Räder zu vergegenwärtigen.

### Bezugszeichenliste

- (1): Lenksystem
- (2): Force-Feedback-Aktuator
- (3): Lenkhandhabe
- (4): Rad, gelenkt
- (5): Phasensystem, erstes
- (6): Phasensystem, zweites
- (7): Maschine, elektrisch
- (8): Steuer- und/oder Regelungseinrichtung
- (9): Umrichter
- (10): Umrichter
- (11): Steuerleitung
- (12): Lenkaktuator
- (13): Spurstange
- (14): Spurstange
- (15): Radlenkhebel
- (16): Radlenkhebel
- (Q₁₋Q₁₂): Umrichter-Halbbrücke
- (a): Phase
- (b): Phase
- (c): Phase

## Patentansprüche

1. Verfahren zum Betrieb eines Lenksystems (1) eines Fahrzeugs, mit einem Force-Feedback-Aktuator (2), der auf eine Lenkhandhabe (3) zur Abbildung von Reaktionskräften zumindest eines gelenkten Rades (4) des Lenksystems (1) in Abhängigkeit von zumindest einer Fahrbahnbeschaffenheit, einer Fahrzeuggeschwindigkeit oder eines aktuellen Lenkwinkels des gelenkten Rades (4) wirkt, wobei der Force-Feedback-Aktuator (2) eine von zumindest einem ersten Phasensystem (5) und einem zweiten Phasensystem (6) antreibbare elektrische Maschine (7) umfasst, wobei ein Schalten von dem zumindest ersten Phasensystem (5) und / oder zumindest zweiten Phasensystem (6) mittels einer Steuer- und/oder Regelungseinrichtung (8) des Lenksystems (1) erfolgt, wobei zwischen dem zumindest ersten Phasensystem (5) und dem zumindest zweiten Phasensystem (6) in Abhängigkeit einer Sensorauswertung und / oder einem Zustand des Fahrzeugs umgeschaltet wird, **dadurch gekennzeichnet, dass** vor dem Umschalten ein Lenkmoment erkannt wird, wobei das Lenkmoment nicht größer als 0,1 Nm ist, und / oder dass das Umschalten beim Erkennen einer im Wesentlichen stillstehenden Lenkhandhabe und/oder bei einer Geradeausfahrt des Fahrzeugs erfolgt.

2. Verfahren nach Anspruch 1, **dadurch gekennzeichnet, dass** das Schalten der Phasensysteme (5, 6) anhand einer Lenkrad-Kennlinie des Lenksystems erfolgt.

3. Verfahren nach einem der vorherigen Ansprüche, **dadurch gekennzeichnet, dass** das Umschalten zwischen den Phasensystemen (5, 6) während der Fahrt und unabhängig von der jeweiligen Fahrgeschwindigkeit des Fahrzeugs erfolgt.

4. Verfahren nach einem der vorherigen Ansprüche, **dadurch gekennzeichnet, dass** während der Fahrt des Fahrzeugs in einem vorgebbaren Zeitintervall von einem Phasensystem (5) auf das andere Phasensystem (6) und umgekehrt umgeschaltet wird.

5. Verfahren nach einem der vorherigen Ansprüche, **dadurch gekennzeichnet, dass** die Umschaltung von einem Phasensystem (5) auf das andere Phasensystem (6) in Abhängigkeit weiterer Parameter, wie etwa einer Betriebszeit und/oder einer Beanspruchungssituation der Phasensysteme (5, 6) und des Force-Feedback-Aktuators (2) vorgenommen wird.

6. Verfahren nach einem der vorherigen Ansprüche, **dadurch gekennzeichnet, dass** in vorgebbaren Zeitintervallen das jeweils inaktive Phasensystem (5, 6) einer Selbstdiagnose unterzogen wird, wobei die Selbstdiagnose ein Aufprägen eines d-Stromes zur Verstärkung oder Abschwächung des magnetischen Feldes unter Analyse des jeweiligen Phasenstromes und/oder der Drehzahl und/oder des Drehmomentes eines Rotors der elektrischen Maschine (7) erfolgt.

7. Verfahren nach einem der vorherigen Ansprüche, **dadurch gekennzeichnet, dass** die elektrische Maschine (7) zumindest zwei Phasensysteme (5, 6) mit jeweils drei Phasen (a, b, c) aufweist, wobei pro Phasensystem (5, 6) zumindest ein Umrichter (9, 10) vorgesehen ist, wobei ein oder zwei Phasensysteme (5, 6) eine Festhaltefunktion für die Lenkhandhabe (3) realisieren.

8. Verfahren nach einem der vorherigen Ansprüche, **dadurch gekennzeichnet, dass** über zumindest zwei Phasensysteme (5, 6) elektrische und/oder mechanische Endanschläge des Rades (4) dem Fahrer angezeigt werden.

## Claims

1. Method for operating a steering system (1) of a vehicle, comprising a force feedback actuator (2) acting on a steering handle (3) to map reaction forces of at least one steered wheel (4) of the steering system (1) depending on at least one road surface condition, a vehicle speed, or a current steering angle of the steered wheel (4), the force feedback actuator (2) comprising an electric machine (7) drivable by at least one first phase system (5) and a second phase system (6), switching from the at least first phase system (5) and/or at least second phase system (6) taking place by means of an open-loop and/or closed-loop control device (8) of the steering system (1), switching between the at least first phase system (5) and the at least second phase system (6) taking place depending on a sensor evaluation and/or a state of the vehicle, **characterized in that** a steering torque is detected before switching, the steering torque not being greater than 0.1 Nm, **and/or in that** switching takes place when a substantially stationary steering handle is detected and/or when the vehicle is traveling straight ahead.

2. Method according to claim 1, **characterized in that** switching of the phase systems (5, 6) takes place based on a steering wheel characteristic curve of the steering system.

3. Method according to either of the preceding claims, **characterized in that** switching between the phase systems (5, 6) takes place while driving and independently of the particular driving speed of the vehicle.

4. Method according to any of the preceding claims, **characterized in that** while the vehicle is moving, switching is carried out from one phase system (5) to the other phase system (6) and vice versa at a predeterminable time interval.

5. Method according to any of the preceding claims, **characterized in that** switching from one phase system (5) to the other phase system (6) is carried out depending on further parameters, such as an operating time and/or a load situation of the phase systems (5, 6) and the force feedback actuator (2).

6. Method according to any of the preceding claims, **characterized in that** at predeterminable time intervals, the particular inactive phase system (5, 6) is subjected to a self-diagnosis, the self-diagnosis taking place by applying a d-current to amplify or weaken the magnetic field by analyzing the particular phase current and/or the speed and/or the torque of a rotor of the electric machine (7).

7. Method according to any of the preceding claims, **characterized in that** the electric machine (7) has at least two phase systems (5, 6) each having three phases (a, b, c), at least one converter (9, 10) being provided per phase system (5, 6), one or two phase systems (5, 6) implementing a holding function for the steering handle (3).

8. Method according to any of the preceding claims, **characterized in that** electrical and/or mechanical end stops of the wheel (4) are indicated to the driver via at least two phase systems (5, 6).

## Revendications

1. Procédé permettant de faire fonctionner un système de direction (1) d'un véhicule, comportant un actionneur à retour de force (2) qui agit sur une manette de direction (3) pour la représentation de forces de réaction d'au moins une roue directrice (4) du système de direction (1) en fonction d'au moins une qualité de chaussée, d'une vitesse de véhicule ou d'un angle de direction actuel de la roue directrice (4), dans lequel l'actionneur à retour de force (2) comprend une machine électrique (7) pouvant être entraînée par au moins un premier système de phase (5) et un second système de phase (6), dans lequel une commutation de l'au moins premier système de phase (5) et/ou de l'au moins second système de phase (6) est effectuée au moyen d'un dispositif de commande et/ou de régulation (8) du système de direction (1), dans lequel une commutation est effectuée entre l'au moins premier système de phase (5) et l'au moins second système de phase (6) en fonction d'une évaluation par capteur et/ou d'un état du véhicule, **caractérisé en ce qu'**un couple de direction est détecté avant la commutation, dans lequel le couple de direction n'est pas supérieur à 0,1 Nm, **et/ou en ce que** la commutation est effectuée lors de la détection d'une manette de direction sensiblement immobile et/ou lors d'un déplacement en ligne droite du véhicule.

2. Procédé selon la revendication 1, **caractérisé en ce que** la commutation des systèmes de phase (5, 6) est effectuée à l'aide d'une courbe caractéristique de volant de direction du système de direction.

3. Procédé selon l'une des revendications précédentes,
**caractérisé en ce que** la commutation entre les systèmes de phase (5, 6) est effectuée pendant la conduite et indépendamment de la vitesse de conduite respective du véhicule.

4. Procédé selon l'une des revendications précédentes,
**caractérisé en ce que,** pendant la conduite du véhicule, on passe d'un système de phase (5) à l'autre système de phase (6) et inversement, dans un intervalle de temps pouvant être prédéfini.

5. Procédé selon l'une des revendications précédentes,
**caractérisé en ce que** la commutation d'un système de phase (5) à l'autre système de phase (6) est effectuée en fonction d'autres paramètres, comme par exemple un temps de fonctionnement et/ou une situation de sollicitation des systèmes de phase (5, 6) et de l'actionneur à retour de force (2).

6. Procédé selon l'une des revendications précédentes,
**caractérisé en ce que,** à des intervalles de temps pouvant être prédéfinis, le système de phase (5, 6) respectivement inactif est soumis à un autodiagnostic, dans lequel l'autodiagnostic effectue une application d'un courant d permettant d'amplifier ou d'atténuer le champ magnétique en analysant le courant de phase respectif et/ou la vitesse de rotation et/ou le couple de rotation d'un rotor de la machine électrique (7).

7. Procédé selon l'une des revendications précédentes,
**caractérisé en ce que** la machine électrique (7) présente au moins deux systèmes de phase (5, 6) comportant respectivement trois phases (a, b, c), dans lequel est prévu au moins un convertisseur (9, 10) par système de phase (5, 6), dans lequel un ou deux systèmes de phase (5, 6) réalisent une fonction de conservation pour la manette de direction (3).

8. Procédé selon l'une des revendications précédentes,
**caractérisé en ce que** des butées de fin de course électriques et/ou mécaniques de la roue (4) sont indiquées au conducteur par l'intermédiaire d'au moins deux systèmes de phase (5, 6).
